# EUROPEAN PATENT SPECIFICATION

(11) **EP 4 034 718 B1**
(45) Date of publication and mention of the grant of the patent: **01.11.2023**
(21) Application number: 20799814.7
(22) Date of filing: 22.09.2020
(51) Int. Cl.: E03B 7/07, G01F 15/06

(54) **SYSTEM FOR RESTRICTING AND MONITORING POTABLE WATER FLOW, SUITABLY FOR WATER UTILITY PROVIDERS, AND PROCEDURE FOR ITS USE**
VORRICHTUNG ZUR REGULIERUNG VOM TRINKWASSERVERBRAUCH
DISPOSITIF DE RÉGULATION DE LA CONSOMMATION D'EAU POTABLE

(30) Priority: 24.09.2019 HU 1900334
(43) Date of publication of application: 03.08.2022
(73) Proprietor: Dunantuli Regionalis Vizmu Zartkoruen Mukodo Reszventarsasag, 8600 Siófok (HU); Nagy, Imre, 8230 Balatonfüred (HU)
(72) Inventor: KRISZTIN, Róbert, 8651 Balatonszabadi (HU); NAGY, Imre, 8230 Balatonfüred (HU)
(74) Representative: Kereszty, Marcell
(86) International application number: PCT/IB2020/058849
(87) International publication number: WO 2021/059132

(56) References cited:
- EP-A1- 3 267 163
- WO-A2-2007/131169
- FR-A1- 2 646 234
- GB-A- 2 516 905
- KR-A- 20100 128 921
- US-A1- 2012 144 898

## Description

The subject of the invention is a system for restricting and monitoring potable water flow, suitably for water utility providers, and a remotely controlled end-point device that forms part of the system. The subject of the invention also includes the method of using the system.

It is common knowledge that the technical environment and tools of service providers that use digital technologies (e.g. Internet and mobile telephony service providers) enable such service providers, through their billing or customer management systems, to prevent non-paying customers or customers with considerable invoice debt from using their service or any part thereof. A digital service is easy to switch on or off depending on whether or not a consumer paid his invoices. Generally, even partial restrictions are suitable for encouraging customers to pay their overdue debt in short time, meaning that service providers can collect their service fees relatively smoothly. This solution is advantageous both in terms of cash flow and operational stability. Public utility providers (electricity, gas) also have similar procedures in place for such situations. However, water utility providers do not yet have a solution that would allow for actions similar to those mentioned above, due to, among others, the rather challenging technical environment of end-points. At the same time, the accounts receivable of water utility providers may reach amounts that are considerable even in light of their annual revenue. For this reason, there is a need for a solution that would allow for the implementation of partial or full restrictions at end-points, so that it also takes into account relevant legislation. In Hungary, effective legislation operates as follows regarding water consumers. If a consumer is a business/public entity/company, access to water may be restricted immediately in case of any overdue debt. If a consumer is a private person, he is entitled to a "sanitary minimum" service even if he has any unpaid debt, and water utility providers are obliged to provide the required minimum service. This means that, when restricting water supply, a provider is to take into account the number of persons using a given end-point (which number may be different at each end-point), and the provider is to calculate the volume of and provide potable water accordingly.

The state of the art includes the following solutions concerning remote water access control.

American publication document No US2019124858 A1 describes an invention that supplements irrigation systems, is supported by hydro generators and batteries, and detects water flow using radio transmission. It uses a short-range radio communication system for data transmission. The presented device is fitted with an above-ground microcontroller, which is connected to separate power supply and is also in galvanic connection with the under-ground device. Thus, the device is not autonomous in terms of energy supply. Another disadvantage of the device is that it may not be controlled remotely.

American patent document No US6098898 A describes an irrigation system that includes multiple water hoses laid out on a determined geographic area. A distinctive feature of the system is that each water hose is fitted with a remotely controlled closing valve and a communication module connected to a control station located at the given geographic area. The water use of each water hose can be controlled individually and remotely from the control station using the valve. A disadvantage is that it is operational only at short-range.

American patent document No US2018230681 A1 describes a water management system that is capable of managing and measuring water use and detecting and reducing any leakage in an efficient manner. The system detects changes to water flow through pressure changes; it can notify users about abnormal circumstances, and, as an option, it can turn off water remotely to eliminate any leakage or other problem.

Chinese publication document No CN107796468 A describes a precise wireless remote water meter, the case of which is connected to a water pipe. The device includes an assembly module, and the assembly module includes a water switch-off case, an integrated circuit, a meter display unit, a display panel cover, and a magnetic drive unit. All electric units of the wireless remote reader are located in the assembly unit and they are separated from the water section. The purpose of the invention is remote meter reading.

Chinese utility model description No CN203659183 U describes a remote water meter device that is based on a GSM communication system. The device includes a water meter case, a microcontroller unit, a battery, a GSM unit, a meter module, and a photoelectric direct reader module. The purpose of the invention is remote meter reading.

International publication document No WO2018076203 A1 describes a water detector and turn-off device, which may be fitted with a battery power supply as an option. The device includes a water detector and a water turn-off mechanism. Optionally, the detectors and the turn-off mechanism may be connected to communications units, so that the given device can communicate with user-side interfaces. For instance, the user-side interface may be a smartphone application. If any undesirable water flow or leakage is detected, the turn-off mechanism triggers an electric motor that shuts off the water flow. Thus, the purpose of the invention is limited to detecting and turning off water flows.

Chinese document No CN1648503 A describes a water detector device that can be controlled remotely in the radio wave range. If water flow parameters reach critical values, the device turns off water automatically. The device includes a remotely controlled water-proof switch-off valve and a signalling unit that measures water levels and is capable of communicating in the radio wave range. The signalling device includes a water sensor, located in a case, and a radio transmitter. The remotely controlled valve includes a circuit that is capable of receiving radio signals, a control circuit, an executing unit, and a control valve. If water level rises, the sensor detects the rise and instructs the control valve via radio signals to switch off the water.

American publication document No US7900650 B1 describes an invention that can shut off main water supply to a system via remote control. The invention includes a solenoid-activated shut-off valve, a sound signal unit, and a remotely controlled switch that can be used to operate the valve remotely. If power supply to the system is cut off, the valve shuts off water automatically as a precautionary measure.

American document No US6491062 B1 describes a remotely controlled water pipe closing system; a unit of the system is responsible for avoiding internal damages to the pipe and excessive water use for irrigation during downtime. The system includes a case that is located between the water inlet and the water outlet. The case includes a water meter, a water shut-off valve, a pre-set volume control mechanism, a radio receiver-transmitter, and a power supply unit.

Chinese document No CN202493765 U describes a wireless water leakage monitoring system. The system includes a wireless water leakage detector unit, a wireless executing unit, a wireless display, and a control unit. The detector unit is mounted onto a water pipe; if it detects critical flow parameters, it displays a corresponding message on the display and sends the information to the control unit, and then the control unit instructs the executing unit to take action, and then the executing unit shuts off the water pipe.

It is clear that all known solutions are focused on remote control and interference, and on reducing unnecessary water and network loss. None of the above-mentioned inventions meet European climate and standard requirements (extreme cold or hot weather, wet environment; placement under ground below a metal cover), none of those inventions use renewable energy exclusively, and none of those inventions are autonomous from an energy supply perspective. Also, none of the above-mentioned solutions is fitted with a programmable electronic device that could be remotely controlled from an IT centre so that information on water use is integrated both in data communication and control.

In conclusion, it is clear that, even though there are known valves and taps that can be controlled remotely, there is no solution that would allow for system-level remote control by a water utility provider, so that the provision of legally required sanitary minimum supply is ensured by measuring and periodically dispensing water. Our system supports the rather delicate balance of daily potable water supply at four primary pillars: remote control (pre-paid option as necessary); pressure management; detection and elimination of illegal water use; management and restriction of outstanding debt levels.

The purpose of the invention is to eliminate the shortfalls of the known solutions, and to implement a solution and a method that is capable of performing the above-mentioned tasks. To this end, we have developed an end-point device that is fully waterproof, can be read underwater, and can be controlled and programmed remotely. There are several end-points (consumer sites) where the level of natural ground water is relatively high. Consequently, a water meter may spend even 5 to 8 months per year under water in an inlet well. Nonetheless, an end-point device must remain operational, available, and capable of sending a live signal even during such periods, so that the provider can monitor a given end-point adequately. This means that full functionality must be guaranteed in the -25 °C to +40 °C range. Another purpose is that the meter must be fit for reading, even if the end-point device and/or the water meter spends months under tens of centimetres of muddy water. Another purpose is that the end-point device be capable of functioning fully autonomously from an energy perspective, preferably for years. A reason for this is the power needed for functioning may not be obtained to the detriment of the person/entity using the water supply. This means that ensuring full energy autonomy for the end-point device is a priority goal. Another purpose is that an end-point device be capable of exchanging information through the GSM network and mobile internet access. This way, end-point devices can be remotely controlled by user devices, and individual water sections may be restricted or shut off completely. Another purpose is that an end-point device be capable of providing information periodically about the water volume running through it. This is necessary to guarantee access to the sanitary minimum volume accurately and managing internal anomalies in the pipe network proactively. Finally, a primary purpose is that an end-point device be fitted with its own defensive and data storage mechanism, with a view to protecting against damages caused by sabotage or vandalism.

The inventive step is based on the recognition that an invention, which is more advantageous than the previous ones, may be created by implementing the end-point device according to claim 1, the system according to claim 4, and the method according to claim 5. This recognition makes it possible to implement a system that is advantageous for water utility providers, the end-point devices of which can be controlled remotely, withstand extremely complex physical circumstances, operate using renewable energy, and are fully autonomous in terms of energy use. The inventive step includes the recognition that the control unit is built into the end-point device, and the end-point device is fitted with an IPx8 cover; so that, first, the control unit does not require a separate power source, and the entire end-point device runs on renewable energy entirely and becomes fully autonomous in terms of energy use, and, second, the entire end-point device can be installed and deployed in an inlet well as a single device, with a design that resists vandalism, sabotage, water, and weather conditions. Another important recognition is that long-range GSM communication is to be used, so that the end-point device can engage in smooth and encrypted communication with the server and the user device, regardless of the material the inlet well is made of (reinforced concrete, bricks, plastic etc.) or if it is empty or full of water (possibly aggressive ground water).

In line with the desired purpose, the most general implementation form of the solution according to the invention is realized by an end-point device in accordance with claim 1. The most general form of the application method is described in method claim 5.

The various implementation forms are described in the sub-claims.

Preferably, in an end-point device according to the present invention, the antenna is a GSM antenna; and the waterproof cover is an IPx8 cover.

Also preferably, the data cable is connected outside of the waterproof cover; the end-point device is also fitted with a LED (Light-Emitting Diode) outside of the waterproof cover, and it is fitted with a sensor and/or GPS unit inside of the waterproof cover.

During the general application of the system according to the invention, at least one end-point device is connected to the potable water network, and it is in wireless connection with a server and at least one user device. A distinctive feature of use of such system is that data on the volume of water that may pass through a given end-point device during a given period is sent from the server to the given end-point device; the electric closing tap is opened via the control unit so that the end-point device lets potable water through the end-point device toward the end point; the end-point device measures the volume of water passing through it; during operation, the end-point device sends live signals and/or measurement data to the server; when the threshold volume of water that may pass through during a given period is reached, the electric closing tap is closed by the control unit, and no potable water is released through the end-point device toward the end point, wherein vibration of the at least one end-point device is monitored using the vibration detection sensor. A preferred feature of the method may be that data on the volume of dispensable water is modified and/or updated on the server as necessary; a connection between the end-point device and the server is established time and time again, and up-to-date data on the water volume that may be dispensed by the given end-point device during a given period is requested; and then the electric closing tap is opened and/or closed by the control unit in the end-point device according to that data.

Another preferred feature of the method may be that the electric closing tap of the end-point device closes, if a live signal and/or data is not sent and/or vibration is detected. In another implementation form, the user device contacts and requests measurement data from the end-point device; also, the user device may contact the server and place an emergency call and/or an error signal may be sent manually.

The invention is presented in more detail below using a drawing of a possible implementation form.

On the attached drawing,

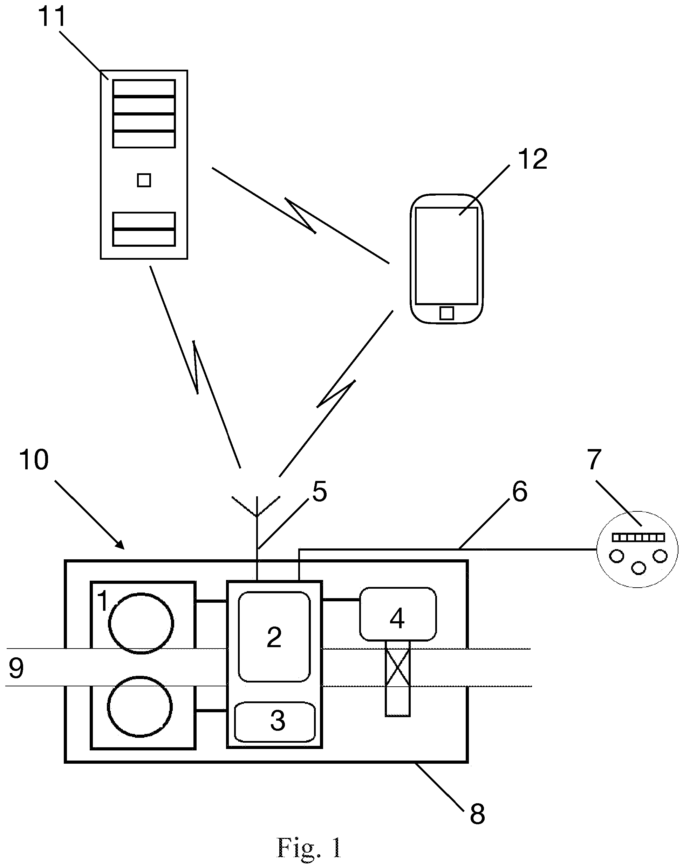

Figure 1 shows the logical diagram and connection layout of the system.

Figure 1 shows the system and the end-point device 10, server 11, and user device 12 belonging to it. The user device 12 may be a smartphone, a tablet, a laptop and/or a desktop computer (PC). For the sake of simplicity and readability, the system implementation form shown in Figure 1 includes one end-point device 10, one server 11, and one user device 12; in fact, the system may include several, possibly hundreds of end-point devices 10 and any number of user devices 12. The user device 12 is connected to the end-point device 10 in a wireless manner, and it grants users web-based and native access. After the appropriate user privileges are set, the user device 12 can be used to implement changes, issue instructions, or request data. There is a wireless connection between the end-point device 10 and the server 11, as well as the end-point device 10 and the user device 12. In the implementation form shown on the drawing, there is also a wireless connection between the server 11 and the user device 12, but this is optional. The end-point device 10 is an electronic device that is autonomous in terms of energy use and can be programmed and controlled remotely; it is capable of integrating information on the volume of water used into both data communication and control. This end-point device 10 is installed in the water inlet well. The antenna 5, typically a GSM antenna, is used for communication between the end-point device 10, the server 11, and the user device 12. The figure shows that the end-point device 10 is connected to a certified water meter 7 through a data cable 6. The data cable 6 is connected to the end-point device 10 outside of the waterproof cover 8, and it does not necessarily form part of the end-point device 10. The water meter 7 is not part of the invention. The end-point device 10 must remain operational even if it remains submerged in water without any external power supply for months. To make this possible, it uses renewable energy; it is fitted with a hydro generator 1 that converts the mechanical energy of the water flow 9 into electricity, and it is fitted with an IPx8 waterproof cover 8, e.g. an IP68 cover (typically meaning that the device can tolerate being submerged into up to 1m deep water continuously). The hydro generator 1 is connected to the control unit 2 and the battery 3. The energy generated by the hydro generator 1 can be stored by the battery 3 for a long period after the last charge, considering that the device can be closed for quite a long time. The control unit 2 is also powered by the battery 3. The control unit 2 is also connected to the antenna 5 and the electric closing tap 4. Typically, the electric closing tap 4 is a ball tap. The hydro generator 1, the control unit 2, the battery 3, the electric closing tap 4, and the antenna 5 are located inside of the waterproof cover 8. The end-point device 10 is fitted with a vibration detector sensor, but also may be fitted with more vibration detector sensors, three-directional accelerometers, and/or GPS units. The end-point device 10 may be fitted with LEDs on the outside of the waterproof cover 8, so that they can indicate the different states of the end-point device 10 (e.g. on/off, error etc.). With a view to protecting against sabotage or vandalism, the waterproof cover 8 could not be disassembled without damages, and it is also extremely difficult to disconnect the end-point device 10 from the water network. In case of vibration, it sends an alarm to the server 11 and/or the user device 12, and shuts down the water supply. (Naturally, it may also be set only to send an alarm or shut down the water supply, if that is more advantageous.)

Once installed on the potable water network, the water passing through the end-point device 10 can extend the active life of the end-point device 10. The end-point device 10 can regulate the volume of water passing through it locally and without any external interference by evaluating signals from external impulse transmitters. The device is fitted with a data cable 6 with a signal receiver ending that was specifically developed for this purpose, that can be connected to the water meter 7. The end-point device 10 remains operational, stores previous data, and stays ready to receive or calibrate new impulses/data and transmit new end-point data even after it is disconnected from the water utility network. Once the water volume threshold is reached, the end-point device 10 enforces any restriction in the water utility network fully automatically through the electric closing tap 4. The server 11 can instruct the end-point device 10 to dispense a given volume of potable water or to dispense potable water during a given period at the given end-point (this may depend on, among others, the number of persons living at the given end-point). As a supplementary security feature, the electric closing tap 4 functions on an open and close basis, and, relying on the control unit 2, it is capable of detecting contamination and alluvium passing through, and it is protected against obstruction both in the opening and closing directions.

In terms of dimensions and weight, the end-point device 10 may not be larger than what the pipes and equipment that pass through the water inlet well, commonly in a horizontal direction, can support. As such equipment commonly lack support or suspension of any kind, the weight of the end-point device 10 may not suitably exceed 1 to 1.5 kg. In terms of dimensions, it must fit into a water inlet well (the dimensions of which are commonly 100*100 cm, but there are also considerably smaller wells).

As the end-point device 10 communicates on an unharmonized frequency, it can transmit data securely (with encryption) through a private APN (Access Point Name) and an established VPN (Virtual Private Network). Communication between the end-point device 10 and the server 11 is GSM-based and is conducted, more specifically, on a 2G/3G/LTE/NB-IoT and/or 5G platform (G stands for generation; LTE stands for Long Term Evolution; NB-IoT stands for Narrow-band Internet of Things). This solution implies that, in addition to switching, the network also allows for the sharing of comprehensive diagnostic data. It is also possible that the server uses different communication channels to communicate with some of the end-point devices 10 than the other end-point devices 10, as the selection of the channel is primarily influenced by the location of the given end-point device 10. To ensure smooth communication, it is suitable to use the most advanced channel that is available at a given location. The end-point device 10 provides data to the server 11 and/or the user device 12 on a daily basis (e.g. water volume dispensed on the given day, water pressure, diagnostics concerning the given end-point device, such as charge level etc.), and it sends a live signal; if the latter is not sent, the device may be programmed to shut down automatically. Typically, RS 232 (Recommended Standard 232, meaning the data transmission standard used in telecommunication), USB, wireless LAN and/or Bluetooth may be used for communication between the end-point device 10 and the user device 12. The user device 12 and the server 11 may also engage in communication, primarily for the purpose of placing emergency calls, initiating communication with an operator and/or reporting errors manually.

The server 11 monitors any increase in the number of end-point devices 10, it keeps a record of end-point devices 10, and adapts to them in terms of remote control. (As it is obvious for a professional, it is not explained here that there can be more than one servers 11 that may be located at various sites, possibly for security reasons, and any number of servers 11 can also be operated in an IT cloud.) The end-point devices 10 may be controlled individually and/or in groups through the server 11. The data received from the different end-point devices 10 may be queried from or listed or filtered by the server 11.

In the course of applying the invention and pursuant to the desired result, the end-point device 10 may be started or restarted without any contact by using a magnet at any time. Then, the end-point device 10 connects to the central server 11. Each time when making a connection, it synchronises its internal clock; this allows for accurate measurement and regulation when using a master meter / slave meter setup. Suitably, operating parameters are received by the end-point device 10 from the server 11 via GSM communication; once the communication is closed, the device keeps working following such parameters. Then, the end-point device 10 connects to the server 11 after periods that are or can be set, and it sends measurement and diagnostic data (including diagnostic data concerning the water network and the end-point device) to the server 11. The end-point device 10 downloads new parameters from the server 11 as necessary, if a new command or parameter is entered by the water utility provider and/or an administrator and/or a user on the server 11 and/or through the server 11 software. The central control software makes it possible to set users / privileges, to enter, record, or administer data concerning end-points, to issue individual or group orders for end-point devices, to export data stored in the software for subsequent analysis on another platform, or to connect to another system. During normal operation, the end-point device 10 measures the volume of water that passes through the device, and it sends the corresponding data to the central system server 11. Such data may also be queried by users using the user device 12. Suitably, the end-point device 10 continuously monitors, by way of the control unit 2, the current intensity from the hydro generator, as well as the charge level of the battery 3. The end-point device 10 is also set not to charge the battery 3 after a given charge level is reached, as continued charging would reduce its useful life. If any external or internal sabotage or any malfunction occurs during normal daily operation, the end-point device 10 can switch (e.g. shut down fully) and communicate without delay. The design of the end-point device 10 also allows for the transmission of network diagnostics (pipe network vibration and anomalies, and data indicating any muddiness) to the central server.

The invention described above has numerous advantages. An advantage of the system is that it is useful for both the service provider and the user, as it can provide useful data. This means that the end-point device does not simply perform its functions passively (data collection, data protection, data transmission), but it also makes the extracted data available and searchable for all stakeholders both on the server and the user device (e.g. smartphone, smartphone application, laptop, tablet, desktop computer etc.). Another advantage is that the end-point device is autonomous in terms of energy supply, meaning that it can run on renewable energy possibly for decades; consequently, it is easy to maintain, does not require much maintenance work, and is environmentally friendly. Another advantage is that it is capable of monitoring anomalies at the end-point (abnormal vibration, possible water leakage). The end-point device has a wide range, and it can be programmed and controlled remotely. As part of its control, the water volume and pressure can be regulated and monitored. Thus, the device can assist water utility providers in the management of their receivables and the discovery of illegal water use. The device is capable of calculating and dispensing the legally required minimum volume to private persons. Another advantage is that it can be used in the entire distribution network and household potable water network. It is a particularly significant advantage that the device can function without any difficulty under extreme physical and operational conditions (underwater, extreme temperature (-25 °C to +40 °C), without installed power supply). Another advantage is that the end-point device is fitted with its own defensive and data storage mechanism, so that it can prevent damages caused by possible vandalism. Another advantage is that the end-point device is capable of running self-diagnostics, and the corresponding data (e.g. charge level, physical obstacle etc.) are sent to the server and, optionally, to the user device. In such a situation, it is also capable of providing detailed information, e.g. indicating the location of a malfunction within the end-point device.

The field of application of the invention is remote water restriction, water regulation, impulse measurement, discovery of illegal water use, and limitation and management of receivables, primarily for water utility providers.

## Claims

1. An end-point device (10) being connectable to a potable water network, and being autonomous in terms of energy use, which end-point device (10) is fitted with a hydro generator (1), a control unit (2), a battery (3), an electric closing tap (4), an antenna (5), and a waterproof cover (8); the hydro generator (1), the control unit (2), the battery (3), the electric closing tap (4), and the antenna (5) is located inside of the waterproof cover (8); the hydro generator (1) is connected to the control unit (2) and to the battery (3); and the control unit (2) is connected to the antenna (5) and to the electric closing tap (4), **characterized by** being connectable to a water meter (7) through a data cable (7), wherein the end-point device (10) is also fitted with a vibration detection sensor being used to monitor vibration of the end-point device (10).

2. The end-point device according to claim 1, **characterized in that** the antenna (5) is a GSM antenna; and the waterproof cover (8) is an IPx8 cover.

3. The end-point device according to claim 1 or 2, **characterized in that** the data cable (6) is connectable to the end-point device (10) outside of the waterproof cover (8); the end-point device (10) is also fitted with a LED outside of the waterproof cover (8), and it is fitted with a GPS unit inside of the waterproof cover (8).

4. A system for restricting and monitoring potable water flow, suitably for water utility providers, **characterized by** comprising at least one end-point device (10) according to any of claims 1 to 3, at least one server (11), and at least one user device (12), wherein the at least one end-point device (10) is connected to the server (11) and to the user device (12) in a wireless manner through the antenna (5) of the at least one end-point device (10).

5. A method of using a system according to claim 4, wherein the at least one end-point device (10) is installed onto the potable water network; wherein data on the volume of water that may pass through the given end-point device (10) during a given period is sent from the server (11) to the given end-point device (10); the electric closing tap (4) is opened via the control unit (2) so that the end-point device (10) lets potable water through the end-point device (10) toward the end point; the end-point device (10) measures the volume of water passing through; during operation, the end-point device (10) sends live signals and/or measurement data to the server (11); when the threshold volume of water that may pass through during a given period is reached, the electric closing tap (4) is closed by the control unit (2), and no more potable water is released through the end-point device (10) toward the end point, wherein vibration of the at least one end-point device (10) is monitored using the vibration detection sensor.

6. The method according to claim 5, **characterized in that** data on the dispensable water volume is modified and/or updated by the server (11) as necessary; a connection between the end-point device (10) and the server (11) is established time and time again, and up-to date data on the water volume that may be dispensed by the given end-point device (10) during a given period is requested; and then the electric closing tap (4) is opened and/or closed by the control unit (2) in the end-point device (10) according to that data.

7. The method according to claim 5, **characterized in that** the electric closing tap (4) of the end-point device (10) closes, if a live signal and/or data is not sent and/or vibration is detected.

## Patentansprüche

1. Endpunktvorrichtung (10), die an ein Trinkwassernetz anschließbar ist und hinsichtlich des Energieverbrauchs autonom ist, wobei die Endpunktvorrichtung (10) mit einem Hydrogenerator (1), einer Steuereinheit (2), einer Batterie (3), einem elektrischen Absperrhahn (4), einer Antenne (5) und einer wasserdichten Abdeckung (8) ausgestattet ist; der Hydrogenerator (1), die Steuereinheit (2), die Batterie (3), der elektrische Absperrhahn (4) und die Antenne (5) innerhalb der wasserdichten Abdeckung (8) angeordnet sind; der Hydrogenerator (1) mit der Steuereinheit (2) und der Batterie (3) verbunden ist; und die Steuereinheit (2) mit der Antenne (5) und dem elektrischen Absperrhahn (4) verbunden ist, **dadurch gekennzeichnet, dass** die Endpunktvorrichtung über ein Datenkabel (7) mit einem Wasserzähler (7) verbindbar ist, wobei die Endpunktvorrichtung (10) ebenfalls mit einem Schwingungserfassungssensor ausgestattet ist, der zur Überwachung von Schwingungen der Endpunktvorrichtung (10) verwendet wird.

2. Endpunktvorrichtung nach Anspruch 1, **dadurch gekennzeichnet, dass** die Antenne (5) eine GSM-Antenne ist; und die wasserdichte Abdeckung (8) eine IPx8-Abdeckung ist.

3. Endpunktvorrichtung nach Anspruch 1 oder 2, **dadurch gekennzeichnet, dass** das Datenkabel (6) mit der Endpunktvorrichtung (10) außerhalb der wasserdichten Abdeckung (8) verbindbar ist; die Endpunktvorrichtung (10) ebenfalls mit einer LED außerhalb der wasserdichten Abdeckung (8) ausgestattet ist und mit einer GPS-Einheit innerhalb der wasserdichten Abdeckung (8) ausgestattet ist.

4. System zur Begrenzung und Überwachung eines Trinkwasserflusses, geeignet für Wasserversorgungsunternehmen, **dadurch gekennzeichnet, dass** das System zumindest eine Endpunktvorrichtung (10) nach einem der Ansprüche 1 bis 3, zumindest einen Server (11) und zumindest eine Benutzervorrichtung (12) aufweist, wobei die zumindest eine Endpunktvorrichtung (10) mit dem Server (11) und der Benutzervorrichtung (12) drahtlos über die Antenne (5) der zumindest einen Endpunktvorrichtung (10) verbunden ist.

5. Verfahren zur Verwendung eines Systems nach Anspruch 4, wobei die zumindest eine Endpunktvorrichtung (10) in dem Trinkwassernetz installiert ist; wobei Daten über das Wasservolumen, das während eines bestimmten Zeitraums durch die gegebene Endpunktvorrichtung (10) fließen darf, von dem Server (11) an die gegebene Endpunktvorrichtung (10) gesendet werden; der elektrische Absperrhahn (4) über die Steuereinheit (2) geöffnet wird, so dass die Endpunktvorrichtung (10) Trinkwasser durch die Endpunktvorrichtung (10) hin zu dem Endpunkt durchlässt; die Endpunktvorrichtung (10) das durchfließende Wasservolumen misst; während des Betriebs die Endpunktvorrichtung (10) Live-Signale und/oder Messdaten an den Server (11) sendet; wenn das Schwellenwasservolumen, das während eines bestimmten Zeitraums durchfließen darf, erreicht ist, der elektrische Absperrhahn (4) durch die Steuereinheit (2) geschlossen wird, und kein Trinkwasser mehr durch die Endpunktvorrichtung (10) in Richtung des Endpunkts freigegeben wird, wobei die Schwingungen der zumindest einen Endpunktvorrichtung (10) unter Verwendung des Schwingungserfassungssensors überwacht werden.

6. Verfahren nach Anspruch 5, **dadurch gekennzeichnet, dass** die Daten über das abzugebende Wasservolumen von dem Server (11) bei Bedarf geändert und/oder aktualisiert werden; eine Verbindung zwischen der Endpunktvorrichtung (10) und dem Server (11) immer wieder hergestellt wird, und aktuelle Daten über das Wasservolumen, das von der jeweiligen Endpunktvorrichtung (10) in einem bestimmten Zeitraum abgegeben werden darf, abgefragt werden; und dann der elektrische Absperrhahn (4) von der Steuereinheit (2) in der Endpunktvorrichtung (10) entsprechend dieser Daten geöffnet und/oder geschlossen wird.

7. Verfahren nach Anspruch 5, **dadurch gekennzeichnet, dass** der elektrische Absperrhahn (4) der Endpunktvorrichtung (10) schließt, falls ein Live-Signal und/oder Daten nicht gesendet werden und/oder Schwingungen erkannt werden.

## Revendications

1. Dispositif de point de terminaison (10) pouvant être connecté à un réseau d'eau potable, et autonome en termes de consommation d'énergie, ledit dispositif de point de terminaison (10) étant équipé d'un générateur hydraulique (1), d'une unité de commande (2), d'une batterie (3), d'un robinet de fermeture électrique (4), d'une antenne (5), et d'un couvercle étanche à l'eau (8), le générateur hydraulique (1), l'unité de commande (2), la batterie (3), le robinet de fermeture électrique (4) et l'antenne (5) sont situés à l'intérieur du couvercle étanche à l'eau (8) ; le générateur hydraulique (1) est connecté à l'unité de commande (2) et à la batterie (3) ; et l'unité de commande (2) est connectée à l'antenne (5) et au robinet de fermeture électrique (4), **caractérisé en ce qu'**il peut être connecté à un compteur d'eau (7) par l'intermédiaire d'un câble de données (6), dans lequel le dispositif de point de terminaison (10) est également équipé d'un capteur de détection de vibrations qui est utilisé pour surveiller les vibrations du dispositif de point de terminaison (10).

2. Dispositif de point de terminaison selon la revendication 1, **caractérisé en ce que** l'antenne (5) est une antenne GSM ; et le couvercle étanche à l'eau (8) est un couvercle IPx8.

3. Dispositif de point de terminaison selon la revendication 1 ou 2, **caractérisé en ce que** le câble de données (6) peut être connecté au dispositif de point de terminaison (10) à l'extérieur du couvercle étanche à l'eau (8) ; le dispositif de point de terminaison (10) est également équipé d'une DEL à l'extérieur du couvercle étanche à l'eau (8), et il est équipé d'une unité GPS à l'intérieur du couvercle étanche à l'eau (8).

4. Système de limitation et de surveillance du débit d'eau potable, adapté aux fournisseurs de services d'eau, **caractérisé en ce qu'**il comprend au moins un dispositif de point de terminaison (10) selon l'une des revendications 1 à 3, au moins un serveur (11), et au moins un dispositif d'utilisateur (12), dans lequel l'au moins un dispositif de point de terminaison (10) est connecté au serveur (11) et au dispositif d'utilisateur (12) de manière sans fil par l'intermédiaire de l'antenne (5) de l'au moins un dispositif de point de terminaison (10) .

5. Procédé d'utilisation d'un système selon la revendication 4, dans lequel l'au moins un dispositif de point de terminaison (10) est installé sur le réseau d'eau potable ; dans lequel des données sur le volume d'eau qui peut passer à travers le dispositif de point de terminaison (10) donné pendant une période donnée sont envoyées du serveur (11) au dispositif de point de terminaison (10) donné ; le robinet de fermeture électrique (4) est ouvert via l'unité de commande (2) de sorte que le dispositif de point de terminaison (10) laisse passer l'eau potable à travers le dispositif de point de terminaison (10) vers le point de terminaison ; le dispositif de point de terminaison (10) mesure le volume d'eau qui le traverse ; pendant le fonctionnement, le dispositif de point de terminaison (10) envoie des signaux en direct et/ou des données de mesure au serveur (11) ; lorsque le volume seuil d'eau pouvant passer pendant une période donnée est atteint, le robinet de fermeture électrique (4) est fermé par l'unité de commande (2), et il n'y a plus d'eau potable libérée à travers le dispositif de point de terminaison (10) vers le point de terminaison, dans lequel la vibration de l'au moins un dispositif de point de terminaison (10) est surveillée à l'aide du capteur de détection de vibration.

6. Procédé selon la revendication 5, **caractérisé en ce que** des données sur le volume d'eau distribuable sont modifiées et/ou mises à jour par le serveur (11) selon les besoins ; une connexion entre le dispositif de point de terminaison (10) et le serveur (11) est établie à plusieurs reprises, et des données mises à jour sur le volume d'eau pouvant être distribué par le dispositif de point de terminaison (10) donné pendant un délai donné sont demandées ; et puis le robinet de fermeture électrique (4) est ouvert et/ou fermé par l'unité de commande (2) dans le dispositif de point de terminaison (10) en fonction de ces données.

7. Procédé selon la revendication 5, **caractérisé en ce que** le robinet de fermeture électrique (4) du dispositif de point de terminaison (10) se ferme, si un signal en direct et/ou des données ne sont pas envoyés et/ou si une vibration est détectée.
